# EUROPEAN PATENT SPECIFICATION

(11) **EP 2 837 531 B1**
(45) Date of publication and mention of the grant of the patent: **27.04.2016**
(21) Application number: 13004025.6
(22) Date of filing: 13.08.2013
(51) Int. Cl.: B60R 21/237

(54) **Single panel airbag module**
Einzeltafel-Airbag-Modul
Module d'airbag à panneau unique

(43) Date of publication of application: 18.02.2015
(73) Proprietor: Dalphi Metal España, S.A., 36213 Vigo (ES)
(72) Inventor: Eireos Garcia, Fernando José, 36213 Vigo (ES)
(74) Representative: Mehnert, Bernhard

(56) References cited:
- EP-A1- 1 464 551
- EP-A2- 1 273 486
- US-A- 5 087 071
- US-A- 5 906 395
- US-A1- 2010 052 300
- US-B1- 7 988 183

## Description

The invention refers to a method of forming an airbag module and to an airbag module.

Conventionally, an airbag module basically consists in a folded bag that inflates quickly through gas produced by a generator when certain sensor devices detect a vehicle collision. This way the bag unfolds between the vehicle occupant and a part of the vehicle, protecting the occupant during a collision.

Typically, bags for airbags are made from two main fabric panels that are sewed together by a peripheral stitch in order to form the inflatable bag of the airbag module, like shown in EP 1464 551 A1. Furthermore, in the bag areas where the thermal and mechanical requirements are higher, these bags comprise additional fabric layers that are intended to reinforce the mentioned areas.

These known solutions of multi-panel airbag modules have the disadvantage that several layers or panels have to be sewed or stitched together in order to form the inflatable bag of the airbag module, which leads to the existence of gas leakage through the peripheral stitches once the bag is inflated. The mentioned leakages make that the adjustment of the permeability of the bag is very complicated, which leads to more tests being necessary during manufacturing of the module and to higher fabrication costs. Moreover, in the bag areas where the thermal and mechanical requirements are higher, these bags must be provided with additionally stitched fabric layers in order to reinforce these areas, which obviously make the manufacturing of the bag more costly, time-consuming and complicated.

Besides, US 5,087,071 and US 7,988,183 disclose Passenger air bag modules wherein the air bag is formed by a single piece of fabric. Herein, the fabric is folded, with its end portions partially overlapping the central portion, and the edges being joined together by seams or metal clamps to form an inflatable airbag. However, like in conventional air bags, the disadvantage of such an airbag module remains that the gas leakage through the stitches or clamped sides is still a fact. Besides, the stitching operations needed make the manufacturing process costly and complicated, on the one hand, and on the other hand, the attachment of an inflator requires additional fixation means. With none of these techniques, driver airbag moduls can be achieved.
Moreover, US 2010/0052300 discloses a folding method for a side airbag module intended to be attached to a vehicle seat for protecting a passenger in a side impact situation. The folding method and the resulting airbag show a non-symmetrical shape and their application is restricted to such impact situations. This document shows the closest prior art.
In view thereof, it is an object of the invention to provide a method of forming an airbag module and an airbag module which is intended for protecting a driver in a frontal impact situation at any rotational position of a steering wheel.
According to a first aspect of the invention, this objective is solved by a method of forming an airbag module according to claim 1.
According to a second aspect of the invention, this objective is solved by an airbag module according to claim 4.

As already explained, with the bag of the invention, no peripheral stitching is needed in order to join the main panel, as the bag of the invention is made from just one panel. Thus, the manufacturing of such bag is simpler and more cost-effective.

Besides, thermal and mechanical properties of the airbag module are significantly increased, without any additional step and without complicating the construction of the bag, because the airbag module of the invention comprises additional folding where the thermal and mechanical requirements in the bag are higher, without any stitching being needed. Thus, in the own construction of the bag, these thermal and mechanical properties are increased only in the areas needed.

Further preferred embodiments are subject to the subclaims.

Hereinafter the invention will be explained in greater detail with further features, characteristics, and advantages with reference to the attached figures, wherein:

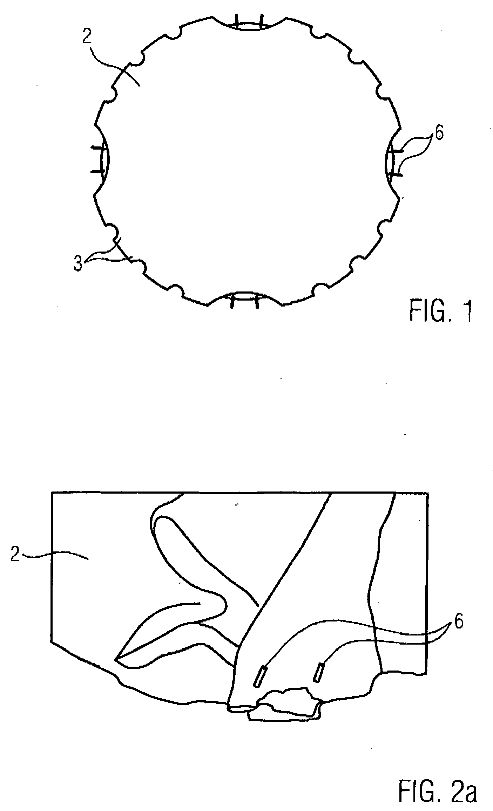

Figure 1 shows the single panel that is going to form the bag of the airbag module according to the invention,

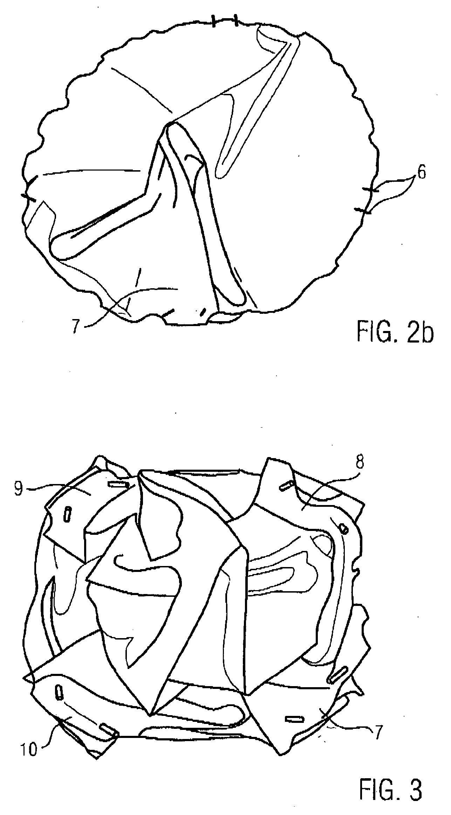

Figures 2a and 2b show the step of folding a sector in a method of forming a bag for an airbag module according to the invention,
Figure 3 shows the appearance of the bag once the sectors of the panel bag have been folded, in the method of forming a bag for an airbag module according to the invention,
Figure 4 shows an alternative of the method of forming a bag for an airbag module according to the invention,
Figure 5 shows a view inside out of the final shape of the bag for an airbag module according to the invention,
Figure 6 shows a view of the final shape of the bag for an airbag module according to the invention,

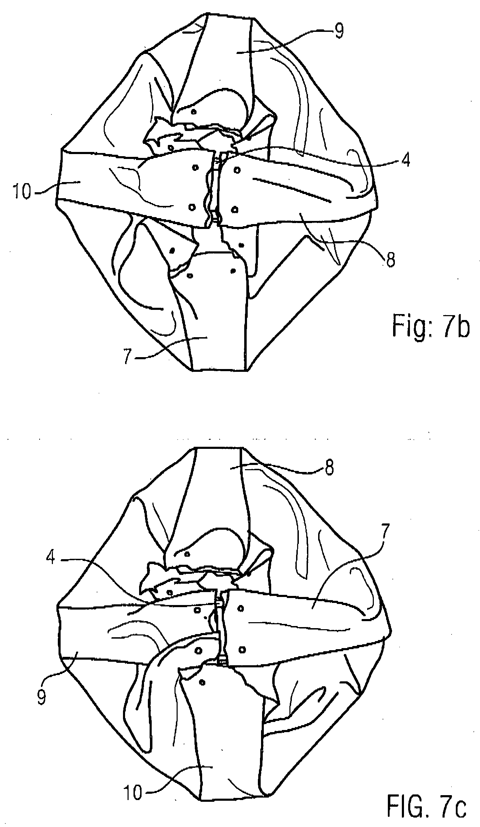

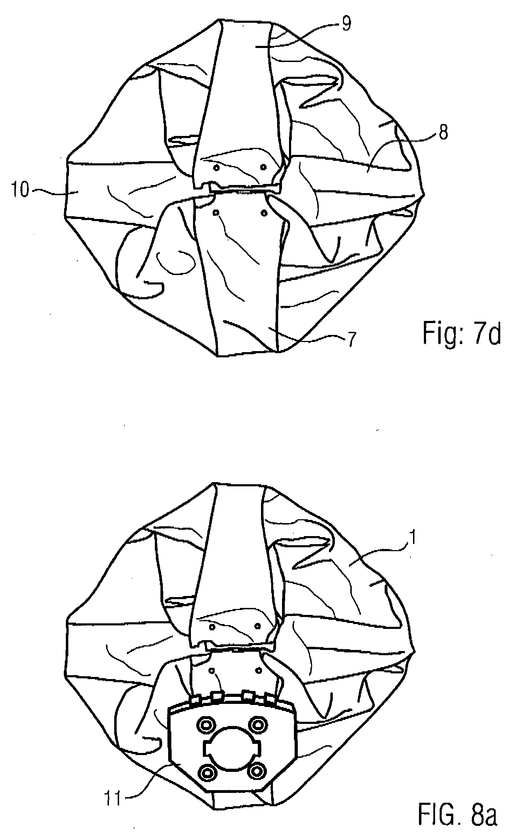

Figures 7a, 7b, 7c and 7d show the step of introducing the retaining means inside the bag in the method of forming a bag for an airbag module according to the invention,
Figures 8a and 8b show the step of placing the gas inflator in the method of forming a bag for an airbag module according to the invention, and
Figure 9 shows a general view of the bag of the airbag module according to the invention, once it is deployed.

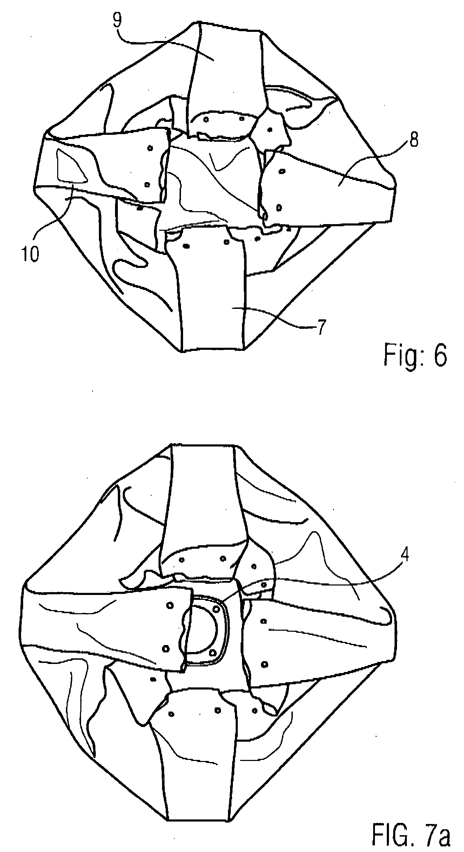

In a first aspect, the invention discloses a bag 1 for an airbag module used in vehicles, the bag 1 being formed from a single fabric panel 2 comprising a plurality of holes 3 located in the perimeter of the fabric panel 2 making the bag 1. By folding the panel 2 and retaining this folding by means of retaining means 4, the bag 1 is tailored and shaped without the need of any stitching. Thus, the bag 1 comprises a plurality of holes 3 located in the perimeter of the panel 2 and retaining means 4, such that the panel 2 is folded in sectors, for example in sectors or segments 7, 8, 9 and 10 of each one quarter of the surface of the panel 2 (see Figure 6) by way of the holes 3 being brought together and being retained by the retaining means 4, in order to tailor and shape the bag 1.

With the bag 1 of the invention, *no peripheral stitching* is needed in order to join the main panel 2, as the bag 1 is made from just one panel 2. Thus, the manufacturing of said bag 1 is simpler and more cost-effective. Initially, the folding in the bag 1 is retained by temporary attaching elements 6, which are removed once the bag 1 is fixed to the retaining means 4. The attaching elements 6 are preferably screws.

Besides, thermal and mechanical properties of the airbag module are significantly increased, because the bag 1 comprises additional folding (not shown) where the thermal and mechanical requirements in the bag 1 are higher, namely about the inflator.

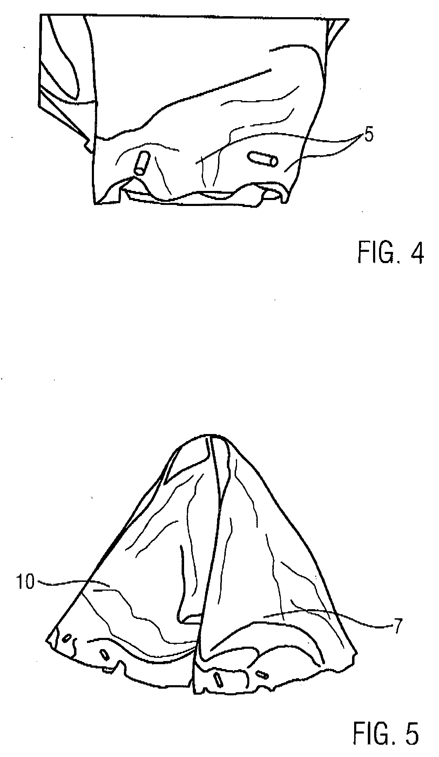

In Figure 4, the shape of the folded bag is shown. As can be seen multiple folding in the periphery area of the panel is given by overlapping adjacent or distant sections of the bag which are to be held by the retaining means at assembly of the module.

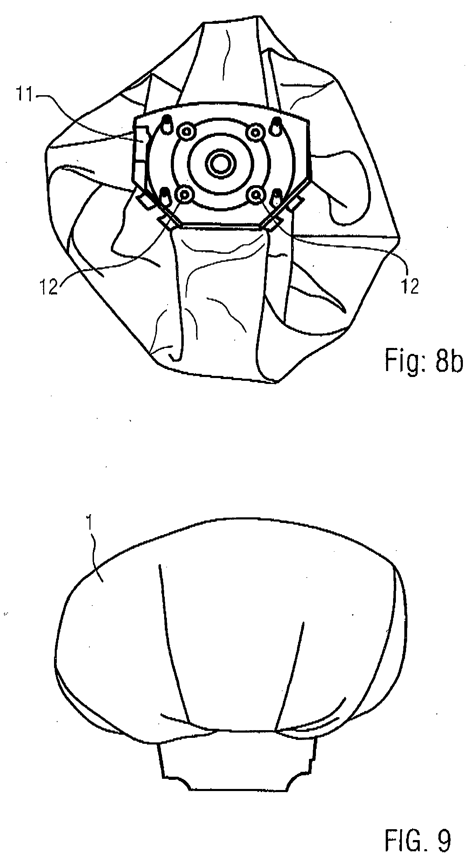

As shown in Figure 9, an airbag 1 made following the invention is deployed to a shape similar to a multi-piece panel bag. As in such traditional bags, one or more venting holes, that can regulate the bag pressure, can be provided at a suitable position.

The main advantages obtained by the bag 1 of the invention are: product simplification, product line simplification, cost savings, improved thermal and mechanical performance where more needed and gas leakage dramatically reduced.

Although several embodiments of the invention have been described and represented, modifications can be made within its scope, and therefore should not be considered as limited to these executions, but the content of the following claims.

## Claims

1. Method of forming an airbag module, **characterized by** the steps of:
• providing a single panel (2) with a plurality of holes (3) in a perimeter region of the panel (2);
• folding a sector (7) of the panel (2) on another sector (7) of the panel by aligning two first ones of the holes (3) with at least two second ones of the holes, and temporarily fixing the alignment of the holes (3) by inserting attaching elements (6) into the holes (3),
• repeating the previous step for remaining sectors of the surface of the panel (2),
• removing the attaching elements (6),
• inserting four retaining means (4) into the aligned holes (3) of the panel (2), and
• fixing the panel (2) to a portion of an airbag module housing (11) by means inserting the retaining means (4) into holes provided in said airbag module housing (11) and by means of nuts (12) being screwed to the retaining means (4).

2. Method of forming an airbag module according to claim 1, **characterized by** a step of attaching a gas inflator to the retaining means (4), in particular by means of the nuts (12) being screwed to the retaining means (4).

3. Method of forming an airbag module according to claim 1 or 2, **characterized by** a step of pressing portions of the perimeter region onto adjoining portions of the perimeter region during the step of fixing the panel (2) to the portion of the airbag module housing (11), in particular together with a gas inflator by means of nuts (12) and bolts (4).

4. An airbag module for a vehicle, preferably formed by a method according to at least one of the previous claims 1 to 3, the airbag module comprising an inflatable airbag (1), the airbag (1) being folded from a single panel (2) into an inflatable airbag structure free from any kind of stitching or gluing, and retaining means (4) for attaching the airbag (1) to a portion of an airbag module housing (11), the air bag (1) comprising a plurality of holes (3) located in a perimeter region of the single panel (2) wherein at least one of or one portion of the retaining means (4) passes through at least two of the holes (3), such that the air bag (1) is retained as such inflatable structure by being sandwiched at the perimeter region of the single panel (2) between the retaining means (4) and the portion of the airbag module housing (11), **characterized in that** the panel (2) is folded in four sectors (7, 8, 9, 10) of one quarter of the surface of the panel (2), and the retaining means (4) comprises four attachment bolts passing through the holes (3) provided in the airbag (1) and in the airbag module housing (11), and is formed to secure an inflator at its flange to the module housing (11), each of the four bolts passing through the same number of holes (3) provided in the airbag (1).

5. Airbag module according to claim 1, **characterized in that** the airbag (1) comprises additional reinforcing folding in the areas of the airbag (1) that are located adjacent to the retaining means (4) and/ or to a gas inflator being part of or being held by the retaining means (4).

6. Airbag module according to any of the claims 4 or 5, **characterized in that** the retaining means (4) is formed by a flange of the inflator.

## Patentansprüche

1. Verfahren zur Ausbildung eines Airbagmoduls, **gekennzeichnet durch** die folgenden Schritte:
- Bereitstellen einer einzelnen Bahn (2) mit einer Mehrzahl von Löchern (3) in einem Umfangsbereich der Bahn (2);
- Falten eines Sektors (7) der Bahn (2) auf einen weiteren Sektor (7) der Bahn durch Ausrichten von zwei ersten der Löcher (3) mit mindestens zwei zweiten der Löcher, und vorübergehendes Fixieren der Löcher (3) **durch** die Einführung von Befestigungselementen (6) in die Löcher (3),
- Wiederholen des vorhergehenden Schrittes für die übrigen Sektoren der Oberfläche der Bahn (2),
- Entfernen der Befestigungselemente (6),
- Einführen von vier Rückhaltemitteln (4) in die ausgerichteten Löcher (3) der Bahn (2), sowie
- Fixieren der Bahn (2) an einem Abschnitt eines Airbagmodul-Gehäuses (11) durch Einführen der Rückhaltemittel (4) in Löcher, welche in dem Airbagmodul-Gehäuse (11) vorgesehen sind, und **durch** Muttern (12), die auf die Rückhaltemittel (4) geschraubt werden.

2. Verfahren zur Ausbildung eines Airbagmoduls gemäß Anspruch 1, **gekennzeichnet durch** einen Schritt des Anbringens eines Gasgenerators an den Rückhaltemitteln (4), insbesondere mit Hilfe der Muttern (12), welche auf die Rückhaltemittel (4) geschraubt werden.

3. Verfahren zur Ausbildung eines Airbagmoduls gemäß Anspruch 1 oder 2, **gekennzeichnet durch** einen Schritt des Drückens von Abschnitten des Umfangsbereiches auf angrenzende Abschnitte des Umfangsbereiches während des Schrittes zum Fixieren der Bahn (2) an dem Abschnitt des Airbagmodul-Gehäuses (11), insbesondere zusammen mit einem Gasgenerator mit Hilfe von Muttern (12) und Bolzen (4).

4. Airbagmodul für ein Kraftfahrzeug, das vorzugsweise durch ein Verfahren gemäß mindestens einem der vorhergehenden Ansprüche 1 bis 3 gebildet ist, wobei das Airbagmodul einen aufblasbaren Airbag (1) umfasst, wobei der Airbag (1) aus einer einzelnen Bahn (2) in eine aufblasbare Airbagstruktur ohne jegliche Art von Nähen oder Kleben gefaltet ist, sowie Rückhaltemittel (4) zur Anbringung des Airbags (1) an einem Abschnitt eines Airbagmodul-Gehäuses (11) umfasst, wobei der Airbag (1) eine Mehrzahl von Löchern (3) aufweist, die sich in einem Umfangsbereich der einzelnen Bahn (2) befinden, wobei mindestens eines der oder ein Abschnitt der Rückhaltemittel (4) derart durch mindestens zwei der Löcher (3) tritt, dass der Airbag (1) als aufblasbare Struktur gehalten wird, indem er an dem Umfangsbereich der einzelnen Bahn (2) zwischen dem Rückhaltemittel (4) und dem Bereich des Airbagmodul-Gehäuses (11) eingeschoben ist, **dadurch gekennzeichnet, dass** die Bahn (2) in vier Sektoren (7, 8, 9, 10) von einem Viertel der Oberfläche der Bahn (2) gefaltet wird, und das Rückhaltemittel (4) vier Befestigungsbolzen umfasst, die durch die in dem Airbag (1) und in dem Airbagmodul-Gehäuse (11) vorgesehenen Löcher (3) hindurch treten, und so ausgebildet ist, dass es einen Gasgenerator an seinem Flansch an dem Modulgehäuse (11) befestigt, wobei die vier Bolzen jeweils durch dieselbe Anzahl von in dem Airbag (1) vorgesehenen Löchern (3) hindurch treten.

5. Airbagmodul gemäß Anspruch 1, **dadurch gekennzeichnet, dass** der Airbag (1) eine zusätzliche Verstärkungsfaltung in den Bereichen des Airbags (1) umfasst, die sich angrenzend an die Rückhaltemittel (4) und/oder an einen Gasgenerator befinden, der Teil des Rückhaltemittels (4) ist oder von diesem gehalten wird.

6. Airbagmodul gemäß einem der Ansprüche 4 oder 5, **dadurch gekennzeichnet, dass** das Rückhaltemittel (4) von einem Flansch des Gasgenerators gebildet wird.

## Revendications

1. Méthode de fabrication d'un module airbag, **caractérisé par** les étapes suivantes:
- fournir un unique panneau (2) avec une pluralité d'orifices (3) disposés sur le région périphérique du panneau (2) ;
- plier un secteur (7) du panneau (2) sur un autre secteur (7) du panneau en alignant deux premiers orifices (3) avec au moins deux seconds orifices, et fixer temporairement l'alignement des orifices (3) en insérant des éléments de liaison (6) dans les orifices (3),
- répéter l'étape précédente pour les secteurs restants de la surface du panneau (2),
- retirer les éléments de liaison (6),
- insérer quatre moyens de retenue (4) dans les orifices alignés (3) du panneau (2), et
- fixer le panneau (2) à une portion du corps (11) du module airbag grâce à l'insertion des moyens de retenue (4) dans les orifices fournis dans le dit corps (11) de module airbag et au moyen d'écrous (12) vissés aux moyens de retenue (4).

2. Méthode de fabrication d'un module airbag selon la revendication 1, **caractérisé par** une étape de fixation du générateur de gaz aux moyens de retenue (4), en particulier au moyen d'écrous (12) vissés aux moyens de retenue (4).

3. Méthode de fabrication d'un module airbag selon la revendication 1 ou 2, **caractérisé par** une étape de pressage des portions de la région périphérique sur les parties attenantes de la région périphérique durant l'étape de fixation du panneau (2) à la portion du corps (11) du module airbag, en particulier avec un générateur de gaz au moyen d'écrous (12) et de boulons (4).

4. Module airbag pour un véhicule, de préférence fabriqué par un procédé selon au moins l'une des revendications précédentes 1 à 3, le module airbag comprenant un coussin gonflable (1), le coussin gonflable (1) étant plié à partir d'un seul panneau (2) dans une structure de coussin gonflable exempte de tout type de couture ou collage, et des moyens de retenue (4) pour fixer le coussin gonflable (1) à une portion du corps de module airbag (11), le coussin gonflable (1) comprenant une pluralité d'orifices (3) situés dans une région périphérique de l'unique panneau (2), dans lequel au moins l'une des ou une partie des moyens de retenue (4) passe à travers au moins deux des orifices (3), de telle sorte que le coussin gonflable (1) est conservé en tant que structure gonflable en étant pris en sandwich dans la zone périphérique de l'unique panneau (2) entre les moyens de retenue (4) et la portion du corps de module airbag (11), **caractérisé en ce que** le panneau (2) est pliée en quatre secteurs (7, 8, 9, 10) d'un quart de la surface du panneau (2), et les moyens de retenue (4) comprennent quatre vis de fixation traversant les orifices (3) prévus dans le coussin gonflable (1) et dans le corps du module airbag (11) et est formé pour fixer un générateur de gaz sur son flasque au corps de module (11), chacun des quatre boulons traversant le même nombre d'orifices (3) prévus dans le coussin gonflable (1).

5. Module airbag selon la revendication 1, **caractérisé en ce que** l'airbag (1) comprend un renforcement additionnel de pliage dans les zones du cousin gonflable (1) qui sont situées adjacentes aux moyens de retenue (4) et/ou un générateur de gaz faisant partie de ou étant maintenu par les moyens de retenue (4).

6. Module airbag selon l'une quelconque des revendications 4 ou 5, **caractérisé en ce que** les moyens de retenue (4) sont formés par un flasque du générateur de gaz.
